# EUROPÄISCHE PATENTSCHRIFT

(11) **EP 0 413 203 B1**
(45) Veröffentlichungstag und Bekanntmachung des Hinweises auf die Patenterteilung: **28.12.1994**
(21) Anmeldenummer: 90114807.2
(22) Anmeldetag: 02.08.1990
(51) Int. Cl.: B23B 47/28

(54) **Vorrichtung zur Anbringung von Bohrungen**
Drilling device
Dispositif de perçage

(30) Priorität: 16.08.1989 DE 3926903
(43) Veröffentlichungstag der Anmeldung: 20.02.1991
(73) Patentinhaber: Adolf Würth GmbH & Co. KG, D-74653 Künzelsau (DE)
(72) Erfinder: Humm, Siegfried, D-7109 Schöntal-Westernhausen (DE); Palosi, Gabor, D-7110 Öhringen-Büttelbronn (DE); Stöcker, Hartmut, D-7170 Schwäbisch Hall-Gailenkirchen (DE)
(74) Vertreter: Patentanwälte Ruff, Beier, Schöndorf und Mütschele

(56) Entgegenhaltungen:
- DE-A- 2 841 200
- DE-A- 3 119 063
- US-A- 2 838 966
- US-A- 4 306 823

## Beschreibung

Die Erfindung betrifft eine Vorrichtung zum Anbringen von Bohrungen an bestimmten Positionen einer Wand eines Schranks, einer Wand einer Schrankwand o.dgl., insbesondere zur Anbringung von Möbelbeschlägen.

In Schränken ist es üblich, Lochreihen für Fachbodenträger anzubringen. Diese müssen an bestimmten Positionen gebohrt werden. Auch die Scharniere für die Schranktüren und die Seitenwandverbinder werden an bestimmten Positionen in Relation zu der Vorderkante einer Wand oder eines Bodens befestigt, so daß vorher an diesen Stellen Bohrungen eingebracht werden müssen. Auch die üblichen Holzdübel, mit denen zwei Wände stumpf aneinander verleimt werden können, müssen in Bohrungen, die an bestimmten, aufeinander angepaßten Stellen gebohrt werden, eingesetzt werden.

Es ist bereits ein Halter für Bohr- oder Frässchablonen bekannt (DE-A1-31 19 063), bei den an dem zu bearbeitenden Werkstück ein Aufnahmerahmen mit Hilfe einer Zwinge festgeklemmt wird. Die Längsschiene ist gegenüber den Aufnahmerahmen verschiebbar. Mit diesem Halter sollen in ihren Abmessungen aufeinander abgestimmmte Werkstücke mit korrespondierenden Bohrungen versehen werden.

Weiterhin bekannt ist eine Lehre zum Bohren von Befestigungslöchern für Möbelscharniere o.dgl. (DE-A1-28 41 200), bei der an einer Schiene Halterungen verschiebbar sind. Dieser Halterungen haben Kopfteile, die in ihren Durchmesser den Töpfen von Topfscharnieren entsprechen. Die Halterungen werden mit ihren Kopfteilen in die bereits gebohrten Topfbohrungen eingesetzt, so daß eine Ausrichtung des korrespondierenden Werkstückteils gegenüber dem erst gebohrten Werkstückteil erreicht werden kann. Wenn die Schiene an dem Werkstück festgelegt ist, ist eine Längsverschiebung der Halterungen nicht mehr möglich.

Weiterhin bekannt ist eine Führung zum Bohren der Kanten von Türen (US-A-43 06 823), die an dem Türblatt festgelegt wird und das Bohren bestimmter Löcher mit Hilfe von Schablonen ermöglicht.

Weiterhin bekannt ist eine einstellbare Bohrlehre (US-A-2 838 966), bei der eine Metallplatte einen Längsschlitz aufweist. Ein rechtwinklig abgebogener Flansch einer zweiten Platte ist mit Hilfe von Schrauben in dem Längsschlitz gehaltert und kann in Richtung des Längsschlitzes verschoben werden. Die Halterung wird zusammen mit zwei durch Dübel zu verbindenden Holzstücken in einen Schraubstock eingespannt.

Der Erfindung liegt die Aufgabe zugrunde, eine Vorrichtung zu schaffen, die bei einfachem Aufbau in der Lage ist, den Handwerker bei der Anbringung von Bohrungen für die unterschiedlichsten Anwendungsfälle an der richtigen Stelle zu unterstützen. Der Handwerker soll in der Lage sein, nur unter Verwendung der Vorrichtung sowie einer Bohrmaschine und Bohrer sowie ggf. mit einer sowieso vorhandenen Schraubzwinge seine Bohrungen plazieren zu können.

Zur Lösung dieser Aufgabe schlägt die Erfindung eine Vorrichtung mit den Merkmalen des Anspruches 1 vor. Weiterbildungen sind Gegenstand von Unteransprüchen. Der Wortlaut aller Ansprüche wird durch Bezugnahme zum Inhalt der Beschreibung gemacht.

Die Vorrichtung wird derart verwendet, daß das Profil an der zu bohrenden Wand festgelegt wird, beispielsweise mit Hilfe von Schraubzwingen. Zu diesem Zweck kann die Wand auf eine Unterlage, eine Werkbank o.dgl. aufgelegt werden. Sobald das Profil einmal in richtiger Position festgeschraubt ist, lassen sich alle Bohrungen im Bereich der einen Kante, der gegenüber der Vorrichtung ausgerichtet wurde, anfertigen. Es braucht nur noch die Halterung verschoben zu werden, ohne daß weitere Messungen durchgeführt werden müssen.

Insbesondere kann vorgesehen sein, daß die Halterung an dem Längsprofil in jeder beliebigen Stellung festlegbar ist, so daß die Verstellung praktisch stufenlos ist. Zum Festlegen kann beispielsweise eine Klemmschraube dienen, es sind aber auch andere Möglichkeiten der Festlegung, durch Hebel o.dgl. möglich. Der Anschlag dient direkt oder indirekt der Positionierung der Halterung und/oder des Profils gegenüber der Bezugskante. An sich soll die Halterung gegenüber der Bezugskante positioniert werden. Zunächst kann der Anschlag aber dazu dienen, das Längsprofil zu positionieren, während die Positionierung der Halterung dann von dem Profil übernommen wird.

Eine der möglichen Locharten, die mit der Halterung hergestellt werden soll und kann, ist die Lochreihe zur Aufnahme von Fachbodenträgern o.dgl.. Hier ist es üblich, daß die Löcher einen bestimmten Abstand von beispielsweise 32 mm haben und ebenfalls einen bestimmten Abstand von der Vorderkante der Wand des Schranks aufweisen. Da für Fachböden an jeder Seite zwei Lochreihen gebohrt werden, kann man den Abstand der zweiten Lochreihe dann eben von der Hinterkante der Schrankwand messen. Für die Herstellung dieser Lochreihen schlägt die Erfindung vor, daß die Halterung eine Reihe äquidistanter, vorzugsweise mit Bohrbuchsen versehener Löcher aufweist, die parallel zu der Bezugskante bzw. einem an der Halterung angebrachten Anschlag verläuft. Der Anschlag ist zur Anlage an der Bezugskante bestimmt. Die Bohrbuchsen dienen dazu, die Lebensdauer der Halterung zu verlängern. Hierbei handelt es sich um eingesetzte Buchsen aus einem verschleißfesten härteren Material. Sie können zusätzlich dazu dienen, wenn sie entsprechend länger ausgebildet sind, den Bohrer besser zu führen. Wenn die Halterung in richtiger Stellung arretiert ist, führt der Handwerker den Bohrer der Reihe nach in die Bohrbuchsen oder Löcher ein und bohrt seine Sacklöcher ggf. mit einem Tiefenanschlag. Wenn er die Reihe gebohrt hat, löst er die Arretierung und verschiebt die Halterung in Längsrichtung des Profils, wobei er beispielsweise durch einen Stift das erste Loch der Reihe mit dem letzten Bohrloch in Übereinstimmung bringt. Dann kann er eine weitere Reihe von Löchern bohren und sich so über die gesamte Länge der Wand vorarbeiten. Die Erfindung schlägt jedoch in Weiterbildung vor, daß die Halterung am Ende der Lochreihe einen mit dem gleichen Abstand vom letzten Loch angeordneten Taststift aufweist. Diesen kann der Handwerker zur Ausrichtung der Halterung gegenüber dem jeweils letzten Loch der gebohrten Reihe verwenden, so daß die Handhabung weiter vereinfacht wird.

Bei Schränken ist es üblich, daß das erste Loch der Lochreihe einen bestimmten Abstand vom Boden des Schranks oder auch von der Decke des Schranks aufweist. Damit also das erste Loch ohne weiteres Nachmessen an der richtigen Stelle der Wand angeordnet ist, ist in Weiterbildung der Erfindung vorgesehen , daß die Vorrichtung einen zweiten Anschlag zur Ausrichtung der Halterung gegenüber dem Profil aufweist. Dieser zweite Anschlag ist mit Vorteil an dem Profil angeordnet . Um die Lage des Anschlags nicht bei jeder Wand neu vermessen und einstellen zu müssen, kann erfindungsgemäß vorgesehen sein, daß der zweite Anschlag einen festen Abstand vom Ende des Profils aufweist, wobei dieser Abstand und die Halterung derart aufeinander abgestimmt sind, daß bei Anliegen der Halterung am Anschlag das erste Loch der Lochreihe den üblichen Abstand vom Boden des Schrankes aufweist.

Insbesondere kann zur definierten Stellung vorgesehen sein, daß die Halterung ein mit dem Profilanschlag zusammenwirkendes Gegenelement aufweist.

Schränke werden aus handelsüblichen Brettern, Tischlerplatten, Spanplatten o.dgl. zusammengebaut. Diese gibt es in relativ wenigen festen Stärken. Um die Verwendung dieser unterschiedlichen Wandstärken besser berücksichtigen zu können, kann erfindungsgemäß vorgesehen sein, daß das an der Halterung vorgesehene Gegenelement und/oder der Anschlag am Profil zur Erzielung eines unterschiedlichen gegenseitigen Abstandes verstellbar ausgebildet ist. Dieser unterschiedliche gegenseitige Grundabstand kann insbesondere in Stufen derart verstellt werden, daß die üblichen Wandstärken von 16, 19 und 22 mm berücksichtigt werden können. Dann kann grundsätzlich das Längsprofil beispielsweise mit seinem Ende bündig mit dem Ende der Wand festgelegt werden, ohne daß hier die Wandstärke der Querwand vermessen werden müßte. Bei festgelegtem Längsprofil läßt sich dann das Gegenelement und/oder der Profilanschlag auf die Wandstärke von 16, 19 oder 22 mm einstellen. Die Einstellmöglichkeiten können eine auf diese Wandstärke hinweisende Bezeichnung aufweisen oder unterschiedlich farbig markiert sein.

Besonders günstig ist es, wenn das Anschlag-Gegenelement am Ende der Halterung angeordnet und verstellbar ausgebildet ist.

Wie bereits erwähnt, muß die Lochreihe nicht nur im Bereich der Vorderkante der Wand, sondern auch im Bereich der Hinterkante der Wand gebohrt werden. Sie muß dabei selbstverständlich vom Boden des Schranks den gleichen Abstand aufweisen, damit die eingelegten Fachböden horizontal verlaufen. Um dies mit der von der Erfindung vorgeschlagenen Vorrichtung besonders einfach durchführen zu können, schlägt die Erfindung in Weiterbildung vor, daß an beiden Enden der Halterung je ein Anschlag-Gegenelement angeordnet ist, wobei die Anordnung und Ausbildung beider Anschlagelemente spiegelbildlich ausgeführt ist. Dies bedeutet, daß der in Längsrichtung gemessene Abstand des letzten Lochs der Lochreihe auf beiden Enden gleich ist. Der Handwerker kann dann, wenn er die Lochreihe an der Hinterkante bohren will, die Halterung vom Profil abnehmen, herumdrehen, und dann das Profil an der Rückwand in gleicher Weise festlegen. Er braucht dann, wenn das Anschlagelement verstellbar ist, nur darauf zu achten, daß beide Anschlagelemente auf die gleiche Wandstärke eingestellt sind.

Um das Entnehmen und umgekehrte Einsetzen der Halterung unnötig zu machen, kann in Weiterbildung der Erfindung ebenfalls vorgesehen sein, daß das Längsprofil an seinen beiden Enden je einen spiegelbildlich angeordneten und ausgebildeten Anschlag aufweist. Dann kann im geschilderten Fall der Handwerker das Profil zusammen mit der Halterung herumdrehen, ohne die Halterung abnehmen zu müssen.

Die Lochreihe an der Vorder- und Rückseite des Schrankes ist das, was der Handwerker zuerst bohrt. Er muß aber auch noch die Bohrungen für die Topfscharniere sowie ggf. die Systemverbinder, Rückwandverbinder, Riffeldübel o.dgl. bohren. Bei den Topfscharnieren gibt es unterschiedliche Topfgrößen und unterschiedlichen Abstand der Topfbohrung von der Vorderkante, je nachdem, in welcher Weise die mit dem Scharnier zu befestigende Tür angeschlagen werden soll. Den Abstand der Topfbohrung von der Vorderkante nennt man auch das Ta-Maß. Um diese unterschiedlichen Möglichkeiten zu berücksichtigen, schlägt die Erfindung vor, daß die Halterung einen ihr gegenüber verschiebbaren Schlitten aufweist, in dem die Öffnung für den Bohrer ausgebildet ist. Sobald also das Profil und die Halterung festgelegt sind, so daß die in Längsrichtung gemessene Position des Scharniers oder Systemverbinders festliegt, kann der Ta-Abstand durch Verschieben des Schlittens eingestellt werden. Insbesondere ist dabei vorgesehen, daß der Schlitten in der Ebene der zu bohrenden Wand senkrecht zu der Bezugskante verschiebbar ist.

Die Durchmesser der Bohrungen für Topfscharniere, Systemverbinder, Klappenscharniere, Exzenterverbinder u.dgl. liegen in einem Bereich, daß sie nicht mehr mit Spiralbohrern gebohrt werden können. Hierzu dienen spezielle Bohrer mit gehärteten Spitzen. Wenn diese ungünstig auf gehärtetes Metall auftreffen, können sie abbrechen. Daher ist in diesem Fall die Verwendung von Bohrbuchsen ungeeignet. Die Erfindung schlägt statt dessen vor, daß die Öffnungen in der Halterung für diesen Zweck zur Aufnahme einer die Bohrspitze des Bohrers einschließenden Glocke ausgebildet ist. Dies hat den weiteren Vorteil, daß für Bohrungen unterschiedlicher Durchmesser Glocken mit gleichem Außendurchmesser verwendet werden können, so daß eine Öffnung für unterschiedliche Bohrdurchmesser verwendet werden kann.

Erfindungsgemäß kann in Weiterbildung vorgesehen sein, daß der Schlitten für jede zu bohrende Lochgröße eine Markierung und die Halterung eine den Abstand des Lochs von der Bezugskante darstellende Skala aufweist. Um einen bestimmten Topfabstand (Ta) einzustellen, braucht also nur die dem Durchmesser des Lochs entsprechende Markierung in Übereinstimmung mit dem entsprechenden Maß auf der Skala gebracht zu werden.

Bei Exzenterbeschlägen, die eine stumpfe Verbindung eines Bretts auf einem anderen ermöglichen, muß in dem zu befestigenden Brett eine Bohrung in der Fläche und eine diese treffende Bohrung in der Kante eingebracht werden. Damit auch dies mit der Vorrichtung nach der Erfindung getan werden kann, schlägt die Erfindung weiterhin vor, daß die Halterung eine vorzugsweise mit einer Bohrbuchse versehene Öffnung für einen ein Loch in der Kante der Wand bohrenden Bohrer aufweist. Es kann also mit der fixierten Halterung sowohl das Sackloch in der Fläche für den Exzenter als auch das Sackloch in der Kante für den Bolzen gebohrt werden. Der Bohrungsdurchmesser für den Bolzen beträgt in fast allen Fällen 8 mm. Dies läßt sich mit einer Bohrbuchse machen.

Die Erfindung schlägt hier vor, daß der Mittelpunkt der Bohrbuchse für den Bohrer für die Kante und der Mittelpunkt des Bohrlochs für die Fläche der Wand die gleiche Längsposition aufweisen bzw. miteinander fluchten. Damit können dann die beiden aufeinander abgestimmten Bohrungen bei gleicher Einstellung der Halterung durchgeführt werden.

Da die in die Kante einzubringende Bohrung sinnvollerweise mittig zwischen beiden Flächen der Wand eingebracht wird, und die Halterung für unterschiedliche Wandstärken Verwendung finden können soll, schlägt die Erfindung in Weiterbildung vor, daß die Halterung einen die Öffnung bzw. die Bohrbuchse für den Kantenbohrer aufweisenden Querschlitten aufweist, der insbesondere senkrecht zu der Fläche der Wand verschiebbar ist. Hier kann wiederum eine den Mittelpunkt der Bohrbuchse darstellende Markierung gegenüber einer in Wandstärkeneinheit geeichten Skala angeordnet sein.

Der Querschlitten kann insbesondere an einem Schenkel der Halterung angeordnet sein, der senkrecht zur Fläche der Wand verläuft. Dieser Schenkel kann auf seiner Innenseite auch den Anschlag aufweisen, der an der Stirnkante der zu bohrenden Wand anliegt.

Bei Holzdübeln, den sog. Riffeldübeln, muß eine Bohrung in der Fläche für das eine Ende des Dübels und eine Bohrung in der Kante in einem zweiten Brett gebohrt werden. Es ist hier üblich, um sicherzustellen, daß die beiden Löcher an zueinander passenden Stellen angeordnet sind, die beiden zu bohrenden Bretter aufeinanderzulegen und mit Schraubzwingen zu verspannen. Dann wird in das obere Brett in die Fläche die eine Bohrung eingebracht und an der gleichen Längsposition die zweite Bohrung in die Kante des darunterliegenden Bretts. Damit auch diese Art des Bohrens mit der Vorrichtung nach der Erfindung möglich wird, kann beispielsweise der Verschiebeweg des Querschlittens so groß gemacht werden, daß die Bohrbuchse bis zur Mitte des unten liegenden Brettes verschoben werden kann. Wenn die Verschiebung aber mit einer Stellspindel erfolgt, so müßte der Handwerker hierzu relativ lange drehen. Um ihm dies zu ersparen, schlägt die Erfindung statt dessen vor, daß der Querschlitten zwei an der gleichen Längsposition angeordnete Öffnungen bzw. Bohrbuchsen aufweist. Dann kann in dem geschilderten Fall die untere der beiden Bohrbuchsen für die darunterliegende Wand verwendet werden.

Für unterschiedlich große Löcher können Bohrer mit gleich großer Bohrglocke verwendet werden. In diesem Fall kann die Halterung mit einem Schlitten mit einer einzigen Öffnung auskommen. Da der abzudeckende Durchmesserbereich aber recht groß ist, kann in Weiterbildung auch vorgesehen sein, daß der Schlitten einen ihm gegenüber verstellbaren Einsatz aufweist und die Öffnung für den Bohrer, vorzugsweise mehrere Öffnungen für den Bohrer, in dem Einsatz angeordnet sind. Der Einsatz kann derart gegenüber dem Schlitten festlegbar sein, daß in jeder Position mindestens eine Öffnung in der durch die Halterung festgelegten Längsposition angeordnet ist.

Insbesondere kann für die sog. Systemverbinder vorgesehen sein, daß in einer der Festlegpositionen des Schiebers zwei Öffnungen in gleicher Längsposition angeordnet sind. Bestimmte Systemverbinder haben einen Doppelzapfen und benötigen daher zwei in der Fläche angeordnete Öffnungen, ggf. unterschiedlichen Durchmessers. Hier können in einer Stellung des Schiebers und seines Einsatzes nacheinander zwei Löcher in der Fläche der Wand gebohrt werden, ohne eine Verstellung vorzunehmen.

Die Erfindung schlägt vor, daß die Halterung und das Profil derart aufeinander abgestimmt sind, daß bei auf der Wand liegenden Profil auch die Halterung auf der Wand an- bzw. aufliegt.

Die Halterung kann mit Vorteil lösbar und abnehmbar mit dem Profil verbunden sein, so daß unterschiedliche Halterungen verwendet werden können. Es ist jedoch auch möglich, daß das Profil mehrere Halterungen aufweist, wobei die mehreren Halterungen identisch oder auch verschieden sein können.

Für besonders lange Wände kann vorgesehen sein, daß das Profil aus mehreren Stücken zusammensetzbar ist.

Weitere Merkmale, Einzelheiten und Vorzüge der Erfindung ergeben sich aus der folgenden Beschreibung bevorzugter Ausführungsformen der Erfindung sowie anhand der Zeichnung. Hierbei zeigen:
- Fig. 1: eine teilweise abgebrochene Aufsicht auf eine erste Ausführungsform der Erfindung;
- Fig. 2: eine Längsseitenansicht eines Teils der Vorrichtung nach Fig. 1;
- Fig. 3: eine vereinfachte Stirnansicht der Vorrichtung der Fig. 1 und 2;
- Fig. 4: eine Seitenansicht einer zweiten Halterung;
- Fig. 5: eine Aufsicht auf die Halterung der Fig. 4;
- Fig. 6: eine Stirnansicht der Vorrichtung der Fig. 4 und 5 von links in Fig. 4;
- Fig. 7: einen Schnitt durch einen mit einer Glocke versehenen Bohrer, wie er bei der Ausführungsform nach Fig. 4 bis 6 Verwendung finden kann.

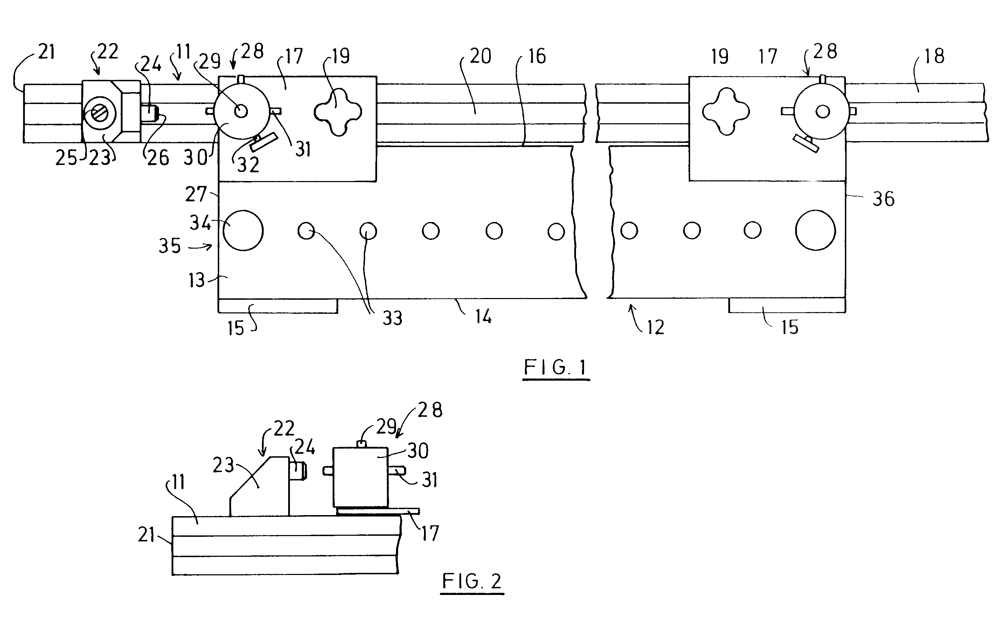

Die in Fig. 1 in Aufsicht dargestellte Vorrichtung enthält als Grundelement ein Längsprofil 11. An dem Längsprofil 11 verschiebbar gelagert ist eine Halterung 12. Die Halterung 12 enthält eine in Längsrichtung des Profils 11 verlaufende Platte 13, an deren dem Profil 11 abgewandten Längsseite 14 im Bereich beider Enden je eine Anschlagplatte 15 befestigt ist. Die Anschlagplatte hat eine Anlagefläche, die parallel zu dem Profil 11 verläuft, das auch als Schiene bezeichnet werden kann.

Ebenfalls im Bereich beider Enden ist an der Platte im Bereich von deren dem Profil 11 zugewandten Längsseite 16 über je ein in Fig. 1 nicht sichtbares Abstandsstück eine parallel zur Platte 13 verlaufende Befestigungsplatte 17 angeschraubt. Einzelheiten dieser Befestigung sind aus Gründen der Vereinfachung nicht dargestellt. Diese Befestigungsplatte 17 liegt auf der in Fig. 1 zu sehenden Oberseite 18 des Profils 11 auf. Durch jede Befestigungsplatte 17 hindurch erstreckt sich eine Klemmschraube, die oberhalb der Befestigungsplatte mit einem Drehknopf 19 versehen ist. Unterhalb der Befestigungsplatte 17 greift jede Befestigungsschraube durch eine Gewindebohrung eines Klemmstücks, das in einem an der Oberseite 18 des Längsprofils ausmündenden hinterschnittenen Schlitz 20 eingesetzt ist. Ein Festschrauben des Drehknopfs 19 führt zu einer Verklemmung und damit Festlegung der Halterung 12 an dem Profil 11.

Mit einem gewissen Abstand von dem linken Ende 21 ist an der Oberseite des Profils 11 ein Anschlag 22 festgelegt. Der Anschlag weist etwa die Form eines Prellbocks 23, allerdings mit nur einem Pufferelement 24, auf. Der Prellbock 23 des Anschlags 22 ist mit Hilfe einer Schraube 25 an dem Profil 11 festgeschraubt, die ebenfalls durch ein in dem Schlitz 20 angeordnetes Klemmstück hindurchgreift. Das freie Ende 26 des etwa mittig angeordneten Puffers 24 bildet die eigentliche Anschlagfläche.

Der Anschlag ist an einer festen Stelle mit Abstand von dem freien Ende 21 des Profils 11 derart an dem Profil festgeschraubt, daß der Abstand zwischen dem Ende 26 des Puffers 24 und dem Ende 21 des Profils 11 einen bestimmten Wert einnimmt.

Auf der Befestigungsplatte 17 der Halterung 12 ist im Bereich des Stirnendes 27 der Halterung ein Gegenelement 28 befestigt. Das Gegenelement 28 weist die Form einer um eine senkrechte Welle 29 verdrehbaren Trommel 30 auf. Die Welle 29 ist in der Mittel linie des Profils 11 angeordnet, ebenso wie der Puffer 24. Die Trommel 30 weist an ihrer Außenseite drei radial verlaufende Zapfen 31 auf. Alle Zapfen haben eine unterschiedlich große Länge. Die Trommel 30 weist auf ihrer Außenseite drei oder vier um 90° versetzte Vertiefungen auf, in die ein unter Federdruck stehendes Rastelement 32 einrückbar ist. Die Vertiefungen sind so angeordnet, daß bei eingerastetem Rastelement 32 jeweils einer der Zapfen 31 in Längsrichtung des Profils 11 verläuft. Wird daher die Halterung 12 in Richtung auf den Anschlag 22 verschoben, so stößt ein Ende eines Zapfens 31 an der Endfläche 26 des Puffers 24 an und definiert daher die mögliche Verschiebung der Halterung 12 in Richtung auf den Anschlag.

Anstelle unterschiedlich langer Zapfen 31 könnte auch eine exzentrisch gelagerte Trommel mit gleich langen Zapfen verwendet werden.

Parallel zur Vorderkante 14 der Platte 13 der Halterung 12 ist eine Reihe von mit gleichem gegenseitigem Abstand versehenen Bohrungen 33 angeordnet, in die einzelne Bohrbuchsen eingesetzt sind. Die Reihe wird an jedem Ende durch einen mit einem Kopf 34 versehenen Taststift 35 beendet, dessen Mittelpunkt vom Mittelpunkt der benachbarten Öffnung 33 den gleichen Abstand aufweist wie je zwei benachbarte Öffnungen 33 voneinander.

Ein gleicher Taststift ist in gleicher Weise am gegenüberliegenden Stirnende 36 der Halterung 12 angeordnet. Im Bereich dieses Stirnendes ist auf der Befestigungsplatte 17 spiegelbildlich das gleiche Gegenelement 28 befestigt. Die Anordnung ist daher bezüglich der Anschlagelemente 28 und der Tastköpfe 35 spiegelbildlich zu einer mittig zwischen den beiden Stirnseiten 27, 36 angeordneten Mittellinie ausgebildet.

Fig. 2 zeigt die Anordnung des Anschlagelementes 22 und des Gegenanschlags 28 von der Seite her. Es ist aus dieser Ansicht zu sehen, daß die Zapfen 31 des Gegenanschlagelementes 28 auch auf gleicher Höhe liegen wie das Pufferelement 24 des Anschlags 22, so daß tatsächlich eine Anlage dieser beiden Elemente aneinander erfolgt. Je nachdem, welcher der drei oder auch vier Zapfen 31 auf den Puffer 24 hin gerichtet ist, ist der tatsächliche Abstand der Stirnkante 27 von dem Anschlag 22 bzw. dem Ende 21 des Profils aus gerichtet.

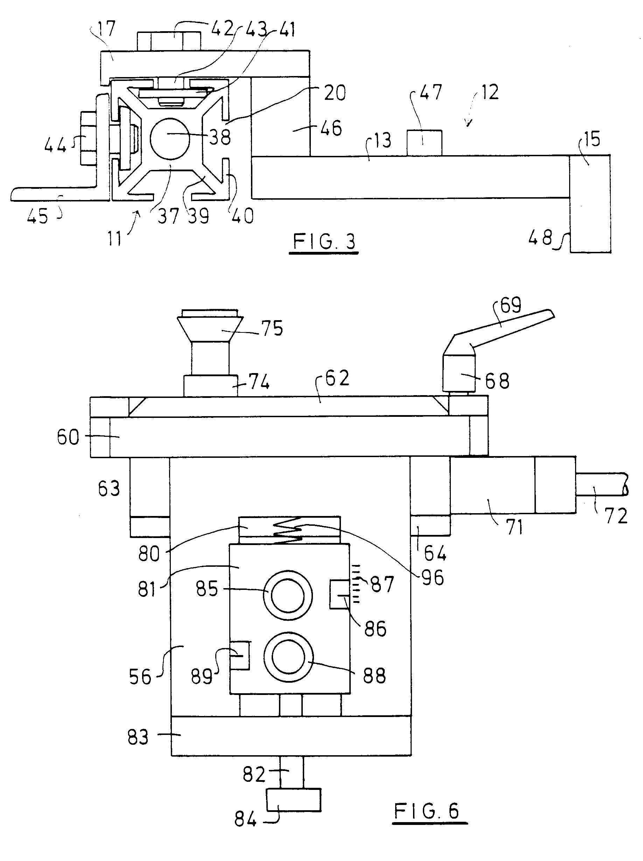

Fig. 3 zeigt nun in vergrößertem Maßstab eine Stirnansicht von Profil 11 und Halterung 12. Das Profil 11 enthält einen quadratischen Kern 37 mit einer kreisrunden Längsbohrung 38. An den vier Ecken des Kerns 37 ist in Diagonalrichtung jeweils ein Steg 39 angeformt, an dessen jeweils äußerem Ende ein L-förmiges Winkelprofil 40 gleicher Schenkellänge angeformt ist. Dadurch ergibt sich eine quadratische Außenform des Profils 11 mit in jeder Außenseite einem hinterschnittenen Längsschlitz 20. In diesem Längsschlitz 20 bzw. dem unter ihm gebildeten Kanal kann also ein Klemmstück 41 eingesetzt werden, das beispielsweise die Form einer Platte mit einer zentralen Gewindebohrung aufweist. In der Darstellung der Fig. 3 sind zwei derartige Klemmstücke 41 eingesetzt, wobei das obere Klemmstück zur Festlegung der Befestigungsplatte 17 und damit der Halterung 12 an dem Profil dient. Die bereits unter Bezugnahme auf Fig. 1 erwähnte Befestigungsschraube 42 ist durch ein Loch in der Befestigungsplatte 17 hindurchgesetzt und greift mit ihrem Gewindeschaft 43 durch die Gewindebohrung des Klemmstücks 41. Wird die Schraube 42 angezogen, so wird die Befestigungsplatte und das Klemmstück 41 einander angenähert und legen dadurch das Profil zwischen sich fest.

In gleicher Weise ist auf der in Fig. 3 linken Rückseite des Profils mit Hilfe einer Schraube 44 und einem Klemmstück 41 ein Winkel 45 angeschraubt, mit dessen Hilfe das Profil selbst mit einer Schraubzwinge an dem Brett angeschraubt werden kann, in das Löcher gebohrt werden sollen.

Wie aus Fig. 3 weiter hervorgeht, ist an der Oberseite der Platte 13 mit Hilfe eines Abstandselementes 46 die Befestigungsplatte 17 angeschraubt. Die Höhe des Abstandselementes 46 ist so gewählt, daß seine Höhe zusammen mit der Dicke der Platte 13 etwa gleich groß ist wie die Höhe des Profils 11. Wenn daher das Profil 11 auf der Oberseite einer zu bohrenden Wand aufliegt, so liegt auch die Unterseite der Platte 13 in etwa auf der Wand auf.

Fig. 3 zeigt ebenfalls, daß die in den Bohrungen 33 eingesetzten Bohrbuchsen 47 auf der Oberseite aus der Platte 13 herausragen, also eine relativ große Länge haben. Dadurch können sie den Bohrer besser führen.

Die in Fig. 1 bereits erwähnte Anschlagplatte 15 ist an der Vorderseite 14 der Platte 13 angeschraubt und erstreckt sich rechtwinklig bis unter die Unterseite der Platte 13.

Die in den Fig. 1 bis 3 dargestellte Vorrichtung wird wie folgt benutzt. Eine zu bohrende Wand eines Schranks wird beispielsweise auf einen Werktisch gelegt. Dann wird die in Fig. 1 dargestellte Vorrichtung auf die Wand des Schranks aufgelegt, wobei angenommen wird, daß die Vorderkante der Wand vorne liegt. Die Halterung wird nach hinten, d.h. in Fig. 1 nach oben geschoben, bis die in Fig. 3 zu sehende Rückseite 48 der Anschläge 15 an der Vorderkante anliegt. Dann wird das Profil 11 so weit nach links verschoben, bis das freie Ende 21 des Profils 11 mit der Seiten- bzw. Unterkante der Wand zusammenfällt. In dieser Position wird das Profil 11 beispielsweise mit Schraubzwingen an der zu bohrenden Wand festgeschraubt. Jetzt wird an dem AnschlagGegenelement 28 die Dicke der später als Boden zu verwendenden Querwand, die später stumpf auf die Wand aufgesetzt werden soll, eingestellt. Beispielsweise entspricht der längste Zapfen 31 einer 22 mm dicken Wand. Der entsprechende Zapfen 31 wird also in Richtung auf den Anschlag 22 gedreht. Dann wird die Halterung 12 in Richtung auf den Anschlag verschoben, bis der Puffer 24 und der entsprechende Zapfen aneinander zur Anlage gelangen. In dieser Stellung werden beide Handgriffe 19 festgedreht. Der Abstand der dem Anschlag 22 nächsten Bohrung 33 entspricht nun dem richtigen Abstand des ersten Loches einer zu bohrenden Lochreihe. In dieser Stellung wird nun durch jede Bohrbuchse 47 mit Hilfe eines Bohrers, der üblicherweise 5 mm Durchmesser aufweist, ein Sackloch gebohrt. Dies kann mit der Handbohrmaschine erfolgen. Sind alle Löcher der Lochreihe gebohrt, werden die Drehknöpfe 19 aufgeschraubt und die Halterung 12 so weit von dem Anschlag 22 weggeschoben, bis der mit dem Kopf 34 versehene Taststift 35 in dem letzten gebohrten Loch der Lochreihe liegt. In dieser Stellung werden die Handgriffe 19 wieder festgeschraubt. Der Handwerker kann eine neue Lochreihe bohren, die automatisch ausgerichtet ist. Dies wird so lange wiederholt, bis die gesamte Lochreihe an der Vorderseite der Wand des Schrankes gebohrt ist.

Nun muß die gleiche Lochreihe an der Rückseite der Wand gebohrt werden. Hierzu gibt es nun zwei Möglichkeiten. Entweder wird die Halterung 12 aus dem rechten Ende des Profils herausgezogen und umgekehrt wieder hineingeschoben, so daß die Platte 13 also jetzt auf der hinteren Seite des Profils 11 liegt. Das Profil 11 wird entsprechend im Bereich der Rückseite in gleicher Weise befestigt wie dies für die Vorderseite beschrieben wurde. Der Handwerker muß das ursprüngliche rechte, jetzt linke Gegenelement 28 auf die gleiche Wandstärke einstellen. Dann kann er den Vorgang wiederholen.

Eine zweite Möglichkeit besteht darin, am rechten Ende des Profils 11 im gleichen Abstand von dem dortigen Ende einen identisch aufgebauten Anschlag 22 anzuordnen. Dann wird zum Bohren der Lochreihe an der Rückseite die ganze Anordnung umgedreht, ohne daß die Halterung 12 entnommen zu werden braucht. Der gleiche Vorgang wiederholt sich wieder. Als Ergebnis ist jetzt eine Lochreihe an der Rückseite und an der Vorderseite gebohrt, deren Löcher miteinander fluchten.

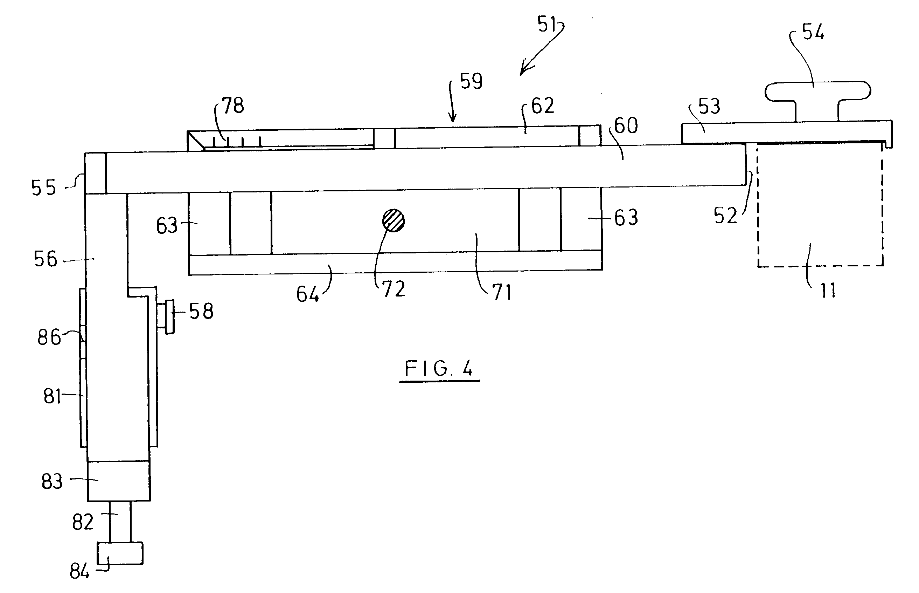

Im Normalfall müssen jetzt noch Bohrungen für Systemverbinder und/oder Exzenterverbinder und/oder Riffeldübel und/oder Topfscharniere gebohrt werden. Hierfür kann erfindungsgemäß eine zweite Halterung verwendet werden, die an dem gleichen oder demselben Profil 11 befestigt werden kann. Diese Halterung ist in Fig. 4 von der Seite her dargestellt, d.h. aus einer der Richtung der Fig. 3 entgegengesetzten Richtung.

Das Profil 11, an dem die Halterung festlegbar ist, ist nur durch seinen gestrichelt gezeichneten Umriß dargestellt. Es ist das gleiche Profil, wie es in Fig. 3 im einzelnen dargestellt und beschrieben ist. An der Halterung 51 der Fig. 4 ist im Bereich ihrer dem Profil 11 zugewandten Stirnkante 52 eine Befestigungsplatte 53 angeschraubt. Die Befestigungsplatte 53 weist eine mit einem Drehknopf 54 versehene Befestigungsschraube auf, die mit einem Klemmstück derart wie in Fig. 3 dargestellt zusammenwirkt. Durch Festdrehen des Drehknopfes 54 läßt sich also die Befestigungsplatte 53 und damit die Halterung 51 in einer bestimmten Längsposition in Längsrichtung des Profils 11 festlegen.

An der gegenüberliegenden vorderen Stirnkante 55 ist an der Halterung 51 ein sich nach unten erstreckender Schenkel 56 angeschraubt, der vor der Kante der zu bearbeitenden Wand des Schrankes zu liegen kommt. Auf der in Fig. 4 rechten Rückseite 57 dieses Schenkels 56 ist ein Anschlagelement 58 befestigt, das dem Anschlag 15 der Halterung nach Fig. 1 bis 3 entspricht.

An der Halterung 51 ist ein Schlitten 59 verschiebbar befestigt. Der Schlitten läßt sich in einer Richtung senkrecht zur Längserstreckung und in der Ebene der Ober- bzw. Unterseite des Profils 11 verschieben. Dadurch kann der Abstand des Schlittens 59 von der Vorderkante der zu bearbeitenden Wand verstellt werden. Diese Vorderkante bildet die Bezugskante. Es kann daher der Topfabstand (Ta) bei einer Topfbohrung auf den gewünschten Wert eingestellt werden.

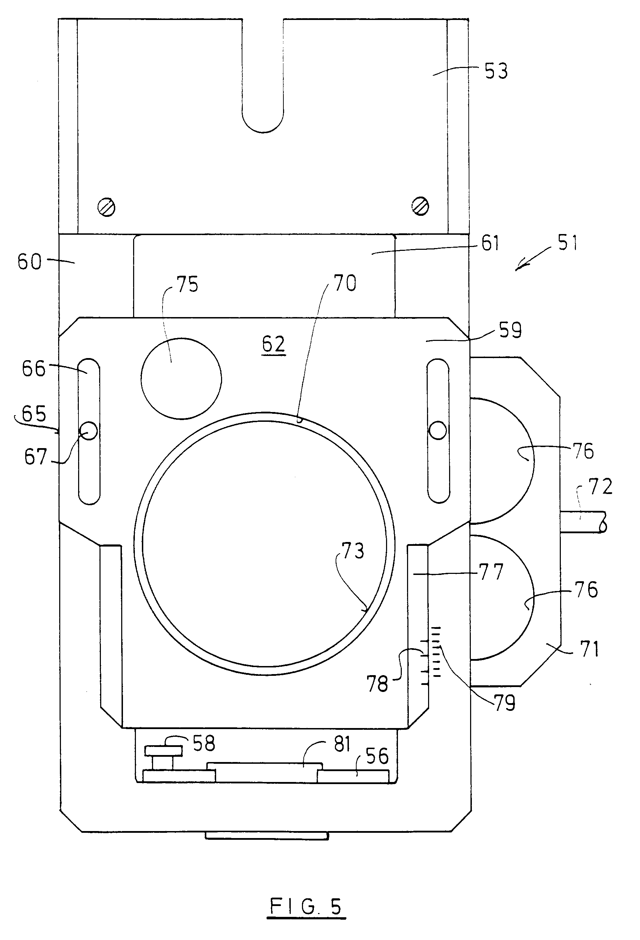

Fig. 5 zeigt eine Aufsicht auf die Halterung der Fig. 4. Die Halterung 51 enthält einen rechteckigen Rahmen 60 mit einer rechteckigen Innenöffnung 61. Der Schlitten 59 enthält eine oberhalb des Rahmens angeordnete Deckplatte 62, zwei aus Fig. 4 zu sehende Wände 63 und einen Boden 64. Die Wände 63 sind in ihrem oberen Bereich beidseits eingeschnitten, so daß in diesem Einschnitt, der nach oben durch die Deckplatte 62 abgeschlossen wird, der Rahmen 60 eingeschlossen ist. Dadurch ist der Schlitten 59 verschiebbar.

Die Deckplatte 62 des Schlittens 59 enthält im Bereich ihrer gegenüberliegenden Längsseitenkanten 65 je ein Langloch 66, durch das eine im Rahmen 60 vorhandene Gewindebohrung 67 sichtbar ist, siehe Fig. 5. In die Gewindebohrungen 67 wird eine durch das Langloch 66 hindurchgreifende Befestigungsschraube 68 eingeschraubt, die mit einem Knebel 69 versehen ist. Der Schlitten 59 läßt sich auf diese Weise in beliebiger Stellung an dem Rahmen 60 festlegen.

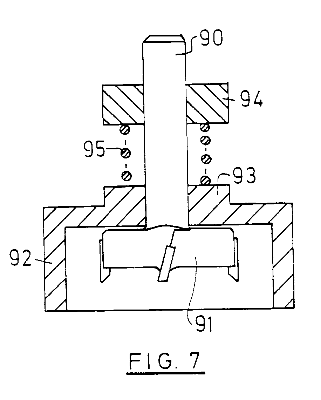

Die Deckplatte 62 und der Boden 64 enthalten jeweils eine zentrale beispielsweise kreisrunde Öffnung 70. Durch die Öffnung 70 ist in Fig. 5 ein Teil eines in dem Schlitten 59 gehalterten Einsatzes 71 zu sehen. Der Einsatz ist im Schlitten 59 unter dem Rahmen 60 der Halterung 51 zwischen den Seitenwänden 63 und dem Boden 64 gleitend eingesetzt. Er kann in einer Richtung senkrecht zur Verschieberichtung des Schlittens 59 bzw. parallel zur Längsrichtung des Profils 11 verschoben werden. Zu diesem Zweck enthält der Einsatz 71 an seinem einen Ende eine Stange 72, die mit einem Griff versehen sein kann. Der Einsatz 71 ist in dem Schlitten 59 in dem dargestellten Beispiel in zwei Stellungen festlegbar. In der in Fig. 5 und 6 dargestellten Stellung ist mittig zur Öffnung 70 eine Öffnung 73 des Einsatzes 71 angeordnet. Die Öffnung ist zur Aufnahme eines mit einer Glocke versehenen Bohrers bestimmt. Die Öffnung 73 definiert-also die Stelle, an der die Bohrung in der Fläche der zu bearbeitenden Wand eingebracht wird. Die Festlegung des Einsatzes 71 gegenüber dem Schlitten erfolgt dadurch, daß in der Deckplatte 62 des Schlittens 59 eine Buchse 74 eingeschraubt ist, in der ein mit einem Zugknopf 75 versehener Zapfen gelagert ist, der an der Unterseite der Deckplatte 62 herausragt und in eine entsprechend angeordnete Buchse des Einsatzes 71 spielfrei eingreift.

Wird an dem Zugknopf 75 gezogen, so gelangt der Zapfen außer Eingriff mit der Buchse, und der Einsatz 71 kann aus der dargestellten Stellung in Fig. 5 und 6 nach links verschoben werden. Es ist dann eine zweite Buchse in dem Einsatz 71 vorhanden, in die der Zapfen eingreifen kann. Die Anordnung dieser Buchse ist so getroffen, daß bei Eingreifen des Zapfens in sie der Mittelpunkt zweier weiterer im Einsatz 71 vorhandener Bohrungen 76 auf der durch die Halterung 51 definierten Längsposition liegt, d.h. auf der Mittellinie zwischen den beiden Längsseitenkanten der Halterung 51. Wird also der Einsatz 71 nach links verschoben, so sind innerhalb der Öffnung 70 dann die beiden kreisrunden Öffnungen 76 mittig angeordnet sichtbar. Während die Öffnung 73 zum Bohren eines Topfscharniers mit einstellbarem Topfabstand dient, dienen die beiden dann vorhandenen Öffnungen 76 zum Bohren zweier Löcher für einen Systemverbinder. Ein Systemverbinder benötigt zwei in gleicher Längsposition nebeneinander angeordnete Löcher unterschiedlichen Durchmessers.

Seitlich sind an einem zurückgesetzten Rand 77 der Deckplatte 62 des Schiebers 59 mehrere Markierungen 78 angebracht. Jede Markierung entspricht einer Größe einer Bohrung für eine bestimmte Topfgröße sowie ggf. einem Systemverbinder. An dem Rahmen 60 ist im Bereich des entsprechenden Randes 77 der Deckplatte 62 eine Skala 79 angeordnet, die einen bestimmten Topfabstand bzw. Systemverbinderabstand von der Bezugskante entspricht. Um eine bestimmte Bohrung an der richtigen Stelle anzubringen, muß nur die dieser Bohrung entsprechende Markierung 78 mit dem entsprechenden Maß auf der Skala 79 in Deckung gebracht werden, um die richtige Stelle zu erreichen. Die Längspositionierung ist durch Festlegen der Halterung 51 bestimmt.

Bei Exzenterverbindern muß zusätzlich zu dem einen Loch in der Fläche der Wand auch noch ein kleineres Loch in der Kante der Wand eingebohrt werden. Hierzu ist der vordere Schenkel 56 der Halterung 51 ebenfalls mit einer zentralen rechteckigen Öffnung 80 versehen, in der ein quer verschiebbarer Schlitten 81 verschiebbar gelagert ist. Die Verschiebung ist ähnlich gelöst wie bei den Schiebern 59, d.h. Randabschnitte des Schiebers 81 schließen den Schenkel 56 zwischen sich ein. Der Querschlitten 81 kann in einer Richtung verschoben werden, die senkrecht auf der Fläche der zu bearbeitenden Wand steht. Dadurch ändert sich die Längsposition des Schiebers 81 nicht. Zur Verschiebung des Querschlittens 81 ist eine Schraubspindel 82 vorgesehen, die durch ein unteres Joch 83 des Querschenkels 56 hindurchgeht und drehbar mit dem Querschlitten 81 verbunden ist. Am äußeren Ende der Schraubspindel 82 ist ein Drehknopf 84 angeordnet. Der Querschlitten 81 enthält eine Bohrbuchse 85 beispielsweise für eine 8 mm-Bohrung. An der Seite des Querschlittens 81 ist eine Markierung 86 in einer Einfräsung angeordnet, die den Mittelpunkt der Bohrbuchse 85 darstellt und gegenüber einer angedeuteten Skala 87 verschiebbar ist. Die Skala 87 kann beispielsweise direkt in der Dicke der Wand geeicht sein.

Parallel zu der Bohrbuchse 85 ist eine weitere Bohrbuchse 86 angeordnet, die in Verschiebungsrichtung des Querschlittens 81 hinter der Bohrbuchse 85 vorgesehen ist. Die beiden Bohrbuchsen 85, 86 haben die gleiche Längsposition bzgl. der Bezugskante. Auch für die Bohrbuchse 88 ist eine Markierung 89 vorgesehen. Die obere Bohrbuchse 85 ist zum Bohren eines Lochs in der Wand bestimmt, in der mit Hilfe der Bohrung 73 oder 76 ein Loch gebohrt wird, beispielsweise bei Exzenterverbindern.

Bei Riffeldübeln muß jedoch das Loch in die Kante des zugehörigen Bretts gebohrt werden, das unter dem anderen Brett liegt. Daher ist diese Bohrbuchse 88 tiefer angesetzt, damit der Handwerker nicht soviel am Querschlitten 81 verstellen muß.

Der Querschlitten 81 enthält im dargestellten Ausführungsbeispiel für jedes Loch nur eine einzige Bohrbuchse 85 bzw. 88 in einer Größe. Für den seltenen Fall, daß auch die Kantenbohrungen in unterschiedlicher Größe durchgeführt werden müßten, könnte auch der Querschlitten 81 ähnlich wie der Schlitten 49 einen Einsatz mit Bohrbuchsen unterschiedlicher Größe aufweisen, die dann ebenfalls in die gewünschte Längsposition einstellbar wären.

Die in den Fig. 4 bis 6 dargestellte Halterung wird in gleicher Weise verwendet wie die Halterung der Fig. 1 bis 3. Da überlicherweise mindestens zwei Topfscharniere oder zwei Systemverbinder verwendet werden, sind an dem Längsprofil also zwei derartige identische Halterungen angeordnet, so daß der relativ kleine Anschlag 58 vollständig ausreicht.

Das Profil 11 wird mit den Halterungen in gleicher Weise auf die Wand geschoben, bis die Anschläge 58 an der Bezugskante anliegen. Die Längspositionierung der Halterungen braucht nicht mit Hilfe des Anschlags 22 vorgenommen zu werden, da sich die Halterungen 51 an den bereits gebohrten Lochreihen orientieren können. Die Mitte eines Topfs für ein Topfscharnier liegt üblicherweise genau mittig zwischen zwei Löchern einer Lochreihe. Es ist selbstverständlich möglich, an der Halterung 51 einen Zeiger oder eine Markierung anzubringen, die mit einem Loch einer Lochreihe in Übereinstimmung gebracht werden kann.

Nach dem Positionieren der Halterungen 51 in Längsrichtung wird das Profil an der Wand festgeschraubt und die Halterungen am Profil festgelegt. Wiederum dient der Anschlag 58 zunächst zur Positionierung des Profils 11. Nachdem die Halterungen 51 arretiert sind, wird der Einsatz 71 in die richtige Stellung gebracht und der Schieber 59 einjustiert. Dann kann das entsprechende Loch mit dem mit einer Glocke versehenen Bohrer gebohrt werden. Anschließend oder vorher kann der Querschlitten 81 so einjustiert werden, daß die Bohrbuchse 85 mittig vor der Kante liegt. Dort kann mit Hilfe eines normalen Spiralbohrers das entsprechende Koch in dem oberen Brett oder dem unteren Brett gebohrt werden.

Einen mit den größeren Bohrungen 73 und 76 des Einsatzes 71 zu verwendenden Bohrer zeigt die Fig. 7 im Querschnitt. Der Bohrer enthält einen Schaft 90, der im Bereich seines unteren Endes einen Bohrkopf 91 aufweist. Der Schaft 90 wird in eine Bohrmaschine eingespannt. Um den Bohrkopf 91 herum ist eine Glocke 92 angeordnet, durch deren Deckelwand 93 der Schaft 90 hindurchgeht. Vorzugsweise ist hier ein Nadellager angeordnet. Der Außendurchmesser der kreisrunden Glocke 92 entspricht dem Innendurchmesser der Öffnung 73. Auf dem Schaft ist oberhalb mit Abstand von der Glocke 92 ein Anschlagring 94 festgelegt, beispielsweise festgeschraubt. Der Abstand zwischen der Oberseite der Glocke 92 und der Unterseite des Abstandsrings 94 bestimmt den Betrag, um den der Bohrkopf aus der dargestellten Stellung nach unten bewegt werden kann. Hiermit läßt sich also die Bohrtiefe festlegen. Zwischen die Glocke 92 und den Abstandsring 94 kann eine Druckfeder 95 eingesetzt werden.

Es können Bohrer mit unterschiedlich großem Bohrkopf 91 zum Herstellen unterschiedlich großer Löcher mit einer Bohrglocke 92 nur einen Durchmessers verwendet werden, so daß die eine Öffnung 73 des Einsatzes 71 für unterschiedlich große Topfbohrungen verwendet werden kann.

Wie sich aus Fig. 5 noch ergibt, liegt der Anschlag 58 etwas hinter der Rückseite des Querschlittens 81, so daß die beim Bohren austretenden Späne an der Mündung des Bohrlochs herausgefördert werden können.

Es ist selbstverständlich möglich, daß die Schraubspindel 82 mit dem Schlitten 81 nicht verbunden ist, sondern ihn nur nach oben schiebt, und daß zur Zurückbewegung oberhalb des Schlittens 81 eine Druckfeder 96 vorgesehen ist.

## Patentansprüche

1. Vorrichtung zur Anbringung von Bohrungen an bestimmten Positionen einer Wand eines Schrankes, einer Schrankwand o.dgl., insbesondere zur Anbringung von Möbelbeschlägen, mit
einem an der zu bearbeitenden Wand festlegbaren Längsprofil (11), das
auf einer Fläche der zu bearbeitenden Wand anliegt und
in einer ausgerichteten Position festlegbar ist
einer Halterung (12, 51), die
in Längsrichtung des Profils (11) verschiebbar und
an dem Profil (11) in unterschiedlichen Längspositionen vorzugsweise an beliebigen Stellen festlegbar ist,
mindestens einem Anschlag (15, 68) zur Positionierung der Halterung (12, 51) und/oder des Profils (11) in Relation zu einer Kante der zu bearbeitenden Wand,
mindestens einem an dem Profil (11) angeordneten zweiten Anschlag (22) zur Ausrichtung der Halterung (12) gegenüber dem Profil (11) in dessen Längsrichtung, und
mindestens einer Öffnung (33, 73, 76) in der Halterung (12, 51) zum Führen des Bohrers, wobei
die Halterung (12, 51) bei an der zu bearbeitenden Wand festgelegtem Längsprofil (11) in dessen Längsvorrichtung verschiebbar ist und ein mit dem Profilanschlag (22) zusammenwirkendes Gegenelement (28) aufweist, und
das Gegenelement (28) und/oder der Profilanschlag (22) zur Erzielung eines unterschiedlichen, insbesondere auf die üblichen Wandstärken ausgerichteten gegenseitigen Abstandes zwischen Halterung (12) und Profilanschlag (22) in der Längsrichtung des Profils (11) verstellbar ausgebildet ist.

2. Vorrichtung nach Anspruch 1 mit einer Klemmeinrichtung, insbesondere einer Klemmschraube (42), zur Festlegung der Halterung (12, 51) an dem Längsprofil (11).

3. Vorrichtung nach Anspruch 1 oder 2, bei der die Halterung (12, 51) eine Reihe äquidistanter vorzugsweise mit Bohrbuchsen (47) versehener Löcher (33) aufweist, die parallel zu der Bezugskante bzw. einem an der Halterung (12) angebrachten Anschlag (15) verläuft, wobei insbesondere am Ende der Lochreihe mit gleichem Abstand ein Taststift (35) angeordnet ist.

4. Vorrichtung nach einem der vorhergehenden Ansprüche, bei der das Profil (11) im Bereich seiner beiden Enden je einen spiegelbildlich angeordneten und ausgebildeten Anschlag (22) aufweist.

5. Vorrichtung nach einem der vorhergehenden Ansprüche, bei der das Gegenelement (28) am Ende der Halterung (12) angeordnet ist.

6. Vorrichtung nach einem der vorhergehenden Ansprüche, bei der an beiden Enden der Halterung (12) je ein Anschlaggegenelement (28) angeordnet ist und die Anordnung und Ausbildung beider Anschlaggegenelemente (28) spiegelbildlich ausgebildet ist.

7. Vorrichtung nach einem der vorhergehenden Ansprüche, mit einem Schlitten (59, 81), der gegenüber der Halterung (51) verschiebbar ist und mindestens eine Öffnung (73, 76) für den Bohrer aufweist, wobei der Schlitten (59) vorzugsweise in der Ebene der zu bearbeitenden Wand senkrecht zu der Bezugskante verschiebbar ist.

8. Vorrichtung nach einem der vorhergehenden Ansprüche, bei der die Öffnung (73, 76) zur Aufnahme einer die Bohrspitze (91) des Bohrers einschließenden Glocke (92) ausgebildet ist.

9. Vorrichtung nach Anspruch 7 oder 8, bei der der Schlitten (59) für jede zu bohrende Lochgröße eine Markierung (78) und die Halterung (51) eine den Abstand des Lochs von der Bezugskante darstellende Skala (79) aufweist.

10. Vorrichtung nach einem der vorhergehenden Ansprüche, bei der die Halterung (51) eine vorzugsweise mit einer Bohrbuchse (85, 88) versehene Öffnung für einen ein Loch in der Kante der zu bearbeitenden Wand bohrenden Bohrer aufweist, wobei insbesondere der Mittelpunkt des Bohrlochs für die Kante und der Mittelpunkt des Bohrlochs für die Fläche der zu bearbeitenden Wand miteinander fluchten, und/oder die Halterung (51) einen die Öffnung bzw. die Bohrbuchse (85, 88) aufweisenden Querschlitten (81) aufweist, der insbesondere senkrecht zu der Fläche der zu bearbeitenden Wand verschiebbar ist und insbesondere an einem senkrecht zur Fläche der zu bearbeitenden Wand verlaufenden Schenkel (56) der Halterung (51) angeordnet ist.

11. Vorrichtung nach Anspruch 10, bei der der Querschlitten (81) zwei an gleicher Längsposition angeordnete Öffnungen bzw. Bohrbuchsen (85, 88) aufweist.

12. Vorrichtung nach einem der Ansprüche 7 bis 11, bei der der Schlitten (59, 81) einen ihm gegenüber verstellbaren Einsatz (71) aufweist, in dem die mindestens eine, vorzugsweise mehrere Öffnungen (73, 76) für den Bohrer angeordnet ist, wobei der Einsatz (71) derart gegenüber dem Schlitten (59, 81) festlegbar ist, daß in jeder dieser Stellungen mindestens eine Öffnung in der Ausrichtposition des Schiebers (59, 81) liegt, wobei vorzugsweise der Einsatz (71) in einer seiner möglichen Positionen zwei in gleicher Längsposition angeordnete, hintereinanderliegende Öffnungen (76) aufweist.

13. Vorrichtung nach einem der vorhergehenden Ansprüche, dadurch gekennzeichnet, daß die Halterung (12, 51) und das Profil (11) derart aufeinander abgestimmt sind, daß bei auf der zu bearbeitenden Wand liegende Profil (11) auch die Halterung (12, 51) an bzw. auf der Wand an-bzw. aufliegt.

14. Vorrichtung nach einem der vorhergehenden Ansprüche, bei der an dem Profil (11) Ansätze (45) befestigbar sind, mit deren Hilfe es mit Schraubzwingen o.dgl. an der zu bearbeitenden Wand befestigbar ist.

15. Vorrichtung nach einem der vorhergehenden Ansprüche, bei der das Profil (11) einen Maßstab aufweist.

## Claims

1. Device for making holes at specific positions of a cupboard wall or the like and in particular for fitting furniture fittings with a longitudinal profile (11) to be fixed to the wall to be worked and which engages on one face of said wall and can be fixed in an oriented position, a fastening (12, 51) displaceable in the longitudinal direction of the profile (11) and fixable on the latter in different length positions and preferably at random points, at least one stop (15, 68) for positioning the fastening (12, 51) and/or the profile (11) relative to an edge of the wall to be worked, at least one second stop (22) located on the profile (11) for orienting the fastening (12) relative to the profile (11) in its longitudinal direction and at least one opening (33, 73, 76) in the fastening (12, 51) for guiding the drill, whereby when the longitudinal profile (11) is fixed on the wall to be worked the fastening (12, 51) is displaceable in its longitudinal direction and has a counter-member (28) cooperating with the profile stop (22) and the counter-member (28) and/or the profile stop (22) is constructed so as to be adjustable in the longitudinal direction of the profile (11) for obtaining a different reciprocal spacing between the fastening (12) and the profile stop (22), more particularly oriented to the standard wall thicknesses.

2. Device according to claim 1 with a clamping device, particularly a screw clip (42) for fixing the fastening (12, 51) to the longitudinal profile (11).

3. Device according to claim 1 or 2, wherein the fastening (12, 51) has a row of equidistant holes (33), preferably provided with drill bushes (47), which runs parallel to the reference edge or on a stop (15) fitted to the fastening (12) and in particular at the end of the row of holes and in equidistant manner is provided a feeler (35).

4. Device according to one of the preceding claims, wherein the profile (11) is provided in the vicinity of its two ends with an in each case mirror-inverted arranged and constructed stop (22).

5. Device according to one of the preceding claims, wherein the counter-member (28) is located at the end of the fastening (12).

6. Device according to one of the preceding claims, wherein at both ends of the fastening (12) is in each case provided a stop counter-member (28) and the arrangement and construction of both members (28) is mirror-inverted.

7. Device according to one of the preceding claims with a slide (59, 81), which is displaceable with respect to the fastening (51) and has at least one opening (73, 76) for the drill, the slide (59) being displaceable at right angles to the reference edge, preferably in the plane of the wall to be worked.

8. Device according to one of the preceding claims, wherein the opening (73, 76) is constructed for receiving a bell (92) enclosing the drill auger bit (91).

9. Device according to claim 7 or 8, wherein the slide (59) has for each hole size to be drilled a marking (78) and the fastening (51) has a scale (79) representing the spacing of the hole from the reference edge.

10. Device according to one of the preceding claims, wherein the fastening (51) has an opening which is preferably provided with a drill bush (85, 88) for a drill for drilling a hole in the edge of the wall to be worked and in particular the centre of the drill hole for the edge and the centre of the drill hole for the face of the wall to be worked are aligned with one another and/or the fastening (51) has a cross-slide (81) having the opening or the drill bush (85, 88) and which is displaceable in particular at right angles to the face of the wall to be worked and in particular is located on a leg (56) of the fastening (51) at right angles to the face of the wall to be worked.

11. Device according to claim 10, wherein the cross-slide (81) has two openings for drill bushes (85, 88) located at the same length position.

12. Device according to one of the claims 7 to 11, wherein the slide (59, 81) has an insert (71) adjustable with respect thereto and in which is located at least one and preferably several openings (73, 76) for the drill, the insert (71) being so fixable with respect to the slide (59, 81) that in each of these positions at least one opening is located in the orientation position of the slide (59, 81) and preferably the insert (71) in one of its possible positions has two successive openings (76) located in the same length position..

13. Device according to one of the preceding claims, characterized in that the fastening (12, 51) and the profile (11) are so matched to one another that in the case of a profile (11) located on the wall to be worked the fastening (12, 51) is located on the wall.

14. Device according to one of the preceding claims, wherein attachments (45) can be fixed to the profile (11) and with the aid thereof it can be fixed with screw clamps or the like to the wall to be worked.

15. Device according to one of the preceding claims, wherein the profile (11) has a scale.

## Revendications

1. Dispositif pour mettre en place des perçages à des positions déterminées dans une paroi d'armoire, de placard ou similaire, notamment pour le montage de ferrures de meubles, avec
un profilé longitudinal (11) pouvant être fixé en position sur la paroi à percer, profilé qui s'applique sur une surface de la paroi à percer et qui peut être fixé en position alignée,
un support (12, 51), qui peut être déplacé dans la direction longitudinale du profilé (11) et qui peut être fixé à différentes positions longitudinales sur le profilé (11), de préférence à des endroits quelconques,
au moins une butée (15, 68) pour positionner le support (12, 51) et/ou le profilé (11) par rapport à un bord de la paroi à percer,
au moins une deuxième butée (22), disposée sur le profilé (11) pour aligner le support (12) par rapport au profilé (11) dans la direction longitudinale de ce dernier, et
au moins une ouverture (33, 73, 76) dans le support (12, 51) pour guider le foret,
le support (12, 51) pouvant être déplacé dans la direction longitudinale du profité longitudinal (11) lorsque ce dernier est fixé en position sur la paroi à percer, et présentant un élément de contre-butée (28) coopérant avec la butée (22) du profité, et
l'élément de contre-butée (28) et/ou la butée (22) du profilé étant réalisés réglables afin d'obtenir une distance mutuelle différente entre le support (12) et la butée (22) dans la direction longitudinale du profilé (11), notamment une distance correspondant aux épaisseurs habituelles de paroi.

2. Dispositif selon la revendication 1, avec un dispositif de serrage, notamment une vis de serrage (42), pour la fixation en position du support (12, 51) sur le profité longitudinal (11).

3. Dispositif selon la revendication 1 ou 2, dans lequel le support (12, 51) présente une rangée de trous équidistants (33), de préférence pourvus de douilles guide-foret (47), rangée qui s'étend parallèlement au bord de référence ou encore à une butée (15) installée sur le support (12), une pointe de palpage (35) étant notamment disposée, à même distance, à l'extrémité de la rangée de trous.

4. Dispositif selon l'une des revendications précédentes, dans lequel le profilé (11) présente une butée respective (22) dans la région de ses deux extrémités, les deux butées (22) étant disposées et configurées de façon symétrique.

5. Dispositif selon l'une des revendications précédentes, dans lequel l'élément de contre-butée (28) est disposé à l'extrémité du support (12).

6. Dispositif selon l'une des revendications précédentes, dans lequel un élément de contre-butée respectif (28) est disposé aux deux extrémités du support (12), la disposition et la configuration des deux éléments de contre-butée (28) étant réalisées symétriques.

7. Dispositif selon l'une des revendications précédentes, avec un coulisseau (59, 81) qui peut être déplacé par rapport au support (51) et présente au moins une ouverture (73, 76) pour le foret, le coulisseau (59) pouvant de préférence être déplacé perpendiculairement au bord de référence dans le plan de la paroi à percer.

8. Dispositif selon l'une des revendications précédentes, dans lequel l'ouverture (73, 76) est conçue pour recevoir une cloche (92) entourant la pointe de perçage (91) du foret.

9. Dispositif selon la revendication 7 ou 8, dans lequel le coulisseau (59) présente un repère (78) pour chaque taille de trous à percer, et le support (51) présente une échelle graduée (79) représentant la distance entre le trou et le bord de référence.

10. Dispositif selon l'une des revendications précédentes, dans lequel le support (51) présente une ouverture, pourvue de préférence d'une douille guide-foret (85, 88), pour un foret perçant un trou dans le bord de la paroi à percer, le centre du trou de perçage pour le bord et le centre du trou de perçage pour la surface de la paroi à percer étant notamment mutuellement alignés, et/ou le support (51) présentant un coulisseau transversal (81), qui présente l'ouverture ou la douille guide-foret (85, 88), qui peut notamment être déplacé perpendiculairement à la surface de la paroi à percer, et qui est notamment disposé sur une branche (56) du support (51) s'étendant perpendiculairement à la surface de la paroi à percer.

11. Dispositif selon la revendication 10, dans lequel le coulisseau transversal (81) présente deux ouvertures ou douilles guide-foret (85, 88) disposées à la même position longitudinale.

12. Dispositif selon l'une des revendications 7 à 11, dans lequel le coulisseau (59, 81) présente un élément rapporté (71), pouvant être déplacé par rapport au coulisseau et dans lequel est(sont) disposée(s) l'ouverture, de préférence les ouvertures (73, 76) pour le foret, l'élément rapporté (71) pouvant être fixé en position par rapport au coulisseau (59, 81) de telle sorte que, dans chacune de ces positions, au moins une ouverture se trouve en alignement avec le coulisseau (59, 81), l'élément rapporté (71) présentant de préférence, dans une des ses positions possibles, deux ouvertures (76) qui se font suite et sont disposées à la même position longitudinale.

13. Dispositif selon l'une des revendications précédentes, caractérisé en ce que le support (12, 51) et le profilé (11) sont mutuellement adaptés de telle sorte que, lorsque le profilé (11) est appliqué sur la paroi à percer, le support (12, 51) s'applique lui aussi contre ou sur la paroi.

14. Dispositif selon l'une des revendications précédentes, dans lequel des éléments d'épaulement (45) peuvent être fixés sur le profilé (11) qui permettent de le fixer à la cloison à percer au moyen de serre-joints ou similaires.

15. Dispositif selon l'une des revendications précédentes, dans lequel le profilé (11) présente une graduation.
